# EUROPEAN PATENT SPECIFICATION

(11) **EP 2 301 232 B1**
(45) Date of publication and mention of the grant of the patent: **04.12.2019**
(21) Application number: 08774594.9
(22) Date of filing: 01.07.2008
(51) Int. Cl.: H04L 29/06, H04M 3/42, H04M 7/00, H04W 12/02, H04M 3/22

(54) **LAWFUL INTERCEPTION OF BEARER TRAFFIC**
LEGALES ABFANGEN VON TRÄGERVERKEHR
INTERCEPTION LÉGALE DE TRAFIC SUPPORT

(43) Date of publication of application: 30.03.2011
(73) Proprietor: Nokia Solutions and Networks Oy, 02610 Espoo (FI)
(72) Inventor: HOFFMANN, Klaus, 81735 München (DE); KASTELEWICZ, Georg, 10179 Berlin (DE); PAULIS, Herbert, A-1050 Wien (AT); PAULS, Markus, 81476 München (DE); VOGEL, Arnim, 10407 Berlin (DE)
(74) Representative: Nokia EPO representatives
(86) International application number: PCT/EP2008/058448
(87) International publication number: WO 2010/000310

(56) References cited:
- WO-A-2008/040583
- US-A1- 2008 022 136

## Description

### Field of the invention

The present invention generally relates to lawful interception of bearer traffic (in addition to signaling traffic). In particular the present invention relates to lawful interception of bearer traffic (in addition to signaling traffic) in a core network domain of a communication system.

### Background of the invention

Lawful interception in telecommunication networks is required by law in most countries of the world. The operator is not allowed to offer telecommunication services without providing lawful interception possibilities to the respective Law Enforcement Agencies (LEA). It is required by law to intercept the complete traffic a subject sends/receives, i.e. both the signaling traffic and the bearer traffic. This generally applies to all kinds of networks and communication systems.

For illustrative purposes only, in the following it is mainly referred to communication systems according to 3GPP (Third Generation Partnership Project) standardization as in non-limiting examples of communication systems providing lawful interception architecture and functions. A specific non-limiting example in this regard is an Internet Protocol (IP) multimedia core network subsystem (IMS). Thus, a basic architectural principle consisting of one or more access networks for communication and service access and a core network providing communication and service facilities is assumed. It is however to be noted that any other communication system being based on this similar basic architectural principle may equally well be used, such as e.g. communication systems according to 3GPP2 (Third Generation Partnership Project 2), IETF (Internet Engineering Task Force), IEEE (Institute of Electrical and Electronics Engineers) or any other standardization body's standardization.

As the underlying network architectures as such are deemed to be known to a skilled person, no detailed description thereof is given herein, but reference is made to the respective well-known standards.

In 3GPP standardization the lawful interception (LI) architecture is currently specified in 3GPP TS33.107 V8.3.0 and in 3GPP TS 33.108 V8.3.0, both of March 2008. These standards define that every involved network performs lawful interception. This means, that
- the access network (e.g. the circuit switched domain network) supervises the subscriber identities defined in the access network (in the packet domain e.g. MSISDN (Mobile Subscriber Integrated Service Digital Network identifier), IMSI (International Mobile Subscriber Identity), or IMEI(International Mobile Equipment Identity)) and intercepts the access network's traffic including both signaling and bearer traffic, and
- the core network (e.g. the IMS core network) supervises the subscriber identities defined in the core network (in the IMS e.g. SIP URI/URL (Session Initiation Protocol Uniform Resource Locator) or Tel URL (Telephone Uniform Resource Locator)) and intercepts the core
network's signaling traffic (in the IMS e.g. IMS SIP (Session Initiation Protocol) signaling traffic).

According to current standards, as a principle, at the originating side of a call/session/transaction only the calling party and at the terminating side of the call/session/transaction only the called party may be intercepted. Even if the originating side would intercept also the called party, thus violating against the aforementioned principle, this would not help either e.g. in case of multiple call forwardings, where even more parties are involved which are not visible at the access network elements at all.

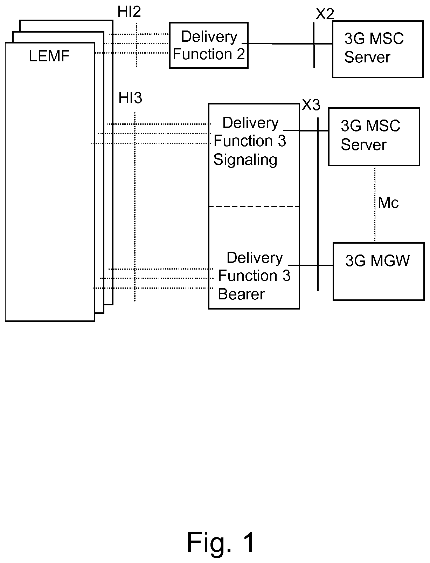

Figure 1 shows a reference configuration for lawful interception according to 3GPP standardization for a circuit-switched domain access, i.e. in the access network. According to Fig. 1, a Law Enforcement Monitoring Facility (LEMF) is connected with a Third Generation (3G) mobile switching center (MSC) via delivery function 2, and is connected with the 3G MSC and a Third Generation (3G) media gateway (MGW) via delivery function 3, respectively, wherein signaling and bearer traffic paths are handled separately. The interfaces HI2 and HI3 thus represent the interfaces between the non-depicted Law Enforcement Agency (LEA) and the two delivery functions. The delivery functions are used to distribute intercept-related information (IRI) to the relevant LEA(s) via HI2 (based on interception areas, if defined), and to distribute the content of communication (CC) to the relevant LEA(s) via HI3 (based on interception areas, if defined).

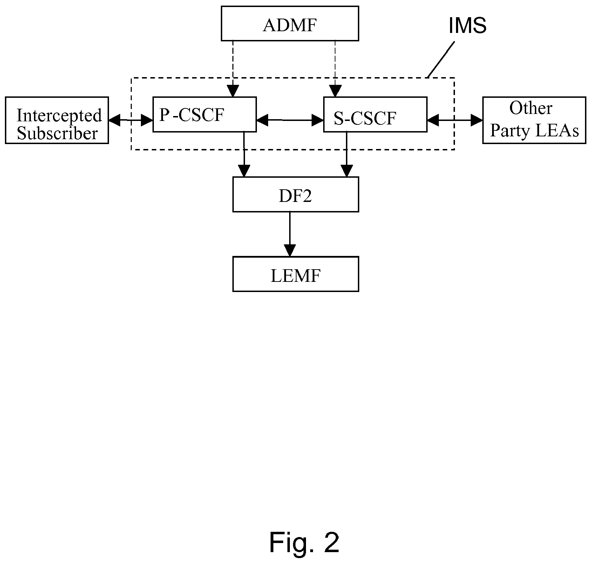

Figure 2 shows a reference configuration for lawful interception according to 3GPP standardization for a packet data multimedia service in the context of IMS, i.e. in the core network. Thereby, SIP messaging (i.e. signaling traffic) is reported as intercept-related information (IRI) for the interception of a multi-media service. According to Fig. 2, all SIP messages executed on behalf of a target subscriber (i.e. intercepted subscriber) are subject to interception at the S-CSCF (Serving-Call Session Control Function) and optionally at the P-CSCF (Proxy-Call Session Control Function). Based upon network configuration, the administration function ADMF shall provision P-CSCFs, or S-CSCFs, or both P-CSCFs and S-CSCFs with SIP URI/URL (Uniform Resource Identifier) or TEL URL target identifiers, as used in the core network domain. These resulting intercepted SIP messages shall be sent to delivery function 2 (DF2) for mediation prior to transmittal across the HI2 interface to a Law Enforcement Monitoring Facility (LEMF). For roaming scenarios, interception at the P-CSCF shall be mandatory, in order to provide IRI interception in the visited network, where the P-CSCF is located in the visited network. Where the P-CSCF is located in the home network, interception at the P-CSCF shall be optional, subject to national regulation.

That is, in view of the above-mentioned requirement that the complete traffic is to be intercepted, according to present standards there are only provided means for lawful interception of signaling and bearer traffic in access networks and means for lawful interception of only signaling traffic in core networks. Therefore, problems in terms of non-compliance with legal provisions arise e.g. when the access network is not able to intercept bearer traffic for any reason.

Namely, besides rather straightforward cases, there exist several cases of communication scenarios currently not being covered by standards for lawful interception, i.e. where user traffic may not be intercepted.

A first exemplary scenario is a call forwarding service in the IMS. For example, a subscriber A in a CS domain (access network of A) calls subscriber B in an IMS (core network), and subscriber B forwards the call to subscriber C in another CS domain (access network of C). If the forwarding party (subscriber B) has to be intercepted, this will be detected in the IMS core network. The IMS is able to send the SIP signaling data to the LEA as defined in the 3GPP standard. The problem is, that according to the 3GPP standard at the originating access network side (i.e. access network of A) the subscriber identity (e.g. MSISDN/IMSI/IMEI) of the A-party has to be intercepted, and at the terminating access network side (i.e. access network of B) the subscriber identity (e.g. MSISDN/IMSI/IMEI) of the C-party has to be intercepted. In this call forwarding scenario, none of the access network nodes is able to check for the B-party actually to be intercepted. This is a violation of the regulatory requirements because the bearer traffic is not intercepted.

A second exemplary scenario is an interconnection between different core networks. For example, a subscriber A calls subscriber B in another (foreign) IMS network different from its own (home) IMS network. According to the standard, the B-party has to be intercepted in the terminating network, i.e. the foreign IMS network. However, there is a strong interest of the LEA/Regulator to intercept the subscriber B, even if the LEA has no juridical access to the operator of subscriber B's IMS network so as to enforce the foreign network operator to perform interception on the LEA's behalf (e.g. if operators A and B are located in different countries).

In summary, it may be that
- the intercepting network elements in the access network simply do not receive enough information to recognize whether a call/session/transaction has to be intercepted or not (despite all network elements work in a standard compliant way), or
- the access network elements are located in foreign networks (e.g. in case of roaming or interconnection) which are out of reach for the lawful enforcement agency (e.g. in another country)).

Further, it may also be that
- the intercepting network elements in the access network are not able to intercept the access traffic due to a lack of interception capabilities (i.e. missing feature).

Hence, the current standards define no solution how the access network can be enabled to intercept the traffic from/to the subject. Stated in more general terms, the current standards define no solution how the bearer traffic can be intercepted in those cases.

In those scenarios, the core network (e.g. IMS) is able to detect the necessity of interception and can at least intercept the (e.g. SIP) signaling traffic. Similarly, the access network would have to intercept the bearer traffic. Due to one of the above mentioned reasons, this network is not capable to decide upon a supervision of the bearer traffic.

As a result, there is an urgent need for operators for a lawful interception solution that covers also these more complex scenarios to comply with legal requirements.

A solution for this problem also needs to fulfill several (non-trivial) requirements defined by the law. For example, neither internally in the network (i.e. at the operator's internal interfaces) nor at the terminal side it shall be visible by any means that a certain subject is intercepted.

Accordingly, there does not exist any feasible solution to the above drawbacks and requirements.

WO2008/040583A1 discloses systems and methods for lawful interception of data transmissions through at least one broadband network. Data transmissions, including voice and data services as well as high bandwidth transmissions such as multimedia and video, are intercepted and routed to authorized agencies such as law enforcement monitoring facilities. The systems and methods also enable interception of data transmissions such as peer to peer type data transmissions that pass through broadband networks from source to recipient without passing through centralized core network elements. These transmissions are intercepted at access points distributed throughout the broadband networks and forwarded to lawful intercept node elements for transmission to authorized entities.

### Summary of embodiments of the invention

The present invention and its embodiments are made to address one or more of the above-described drawbacks and requirements. Thus, the present invention and its embodiments are intended to mitigate drawbacks and to fulfill requirements in lawful interception of bearer traffic.

According to exemplary aspects of the present invention, there are disclosed:
- a method as set out in any one of claims 1 to 9, and
- an apparatus as set out in any one of claims 10 to 17.

According to the present invention and its embodiments, IMS means to provide lawful interception particularly in those cases where standardized access network interception fails.

According to a first focus of the present disclosure, it is assumed that core network border elements are present at respective sides of a communication transaction (e.g. call, session, event or the like) and that these core network border elements have interception capabilities.

According to one exemplary aspect of the present disclosure, there is provided a method at a core network border element, comprising detecting a necessity of lawful interception, and performing lawful interception of bearer traffic in a communication transaction.

According to further developments or modifications thereof, one or more of the following applies:
- the method further comprises obtaining core network identifiers of all parties involved in the communication transaction,
- the obtaining of core network identifiers comprises receiving a session initiation protocol header containing the network identifiers of all involved parties,
- the necessity detecting comprises checking whether any one of the obtained core network identifiers match with predetermined identities for being intercepted,
- if the executing core network border element is located on an originating side of the core network with respect to the communication transaction, core network identifiers of the originating party are checked, and if the executing core network border element is located on a terminating side of the core network with respect to the communication transaction, core network identifiers of the terminating party are checked,
- the necessity detecting comprises gaining information about the necessity of lawful interception from a control function element within the core network,
- the gaining of necessity information comprises receiving a session initiation protocol header containing at least one of the necessity information and a flag indicating a necessity of lawful interception,
- if the necessity detecting is accomplished at a signaling part of the core network border element, the method further comprises informing a bearer part of the core network border element about the necessity of lawful interception, wherein the lawful interception of bearer traffic in the communication transaction is performed at the bearer part of the core network border element,
- if the executing core network border element is located on an originating side of the core network with respect to the communication transaction, bearer traffic of the originating party is intercepted, and if the executing core network border element is located on a terminating side of the core network with respect to the communication transaction, bearer traffic of the terminating party is intercepted,
- the core network is an internet protocol multimedia core network subsystem, and/or
- the core network border element comprises at least one of a combination of media gateway control function and a media gateway, a border control function and a border gateway function, and an interconnection border control function and a border gateway function.

According to one exemplary aspect of the present disclosure, there is provided an apparatus being operable as a core network border element, comprising a detector configured to detect a necessity of lawful interception, and an interception processor configured to perform lawful interception of bearer traffic in a communication transaction.

According to further developments or modifications thereof, one or more of the following applies:
- the apparatus further comprises an obtainer configured to obtain core network identifiers of all parties involved in the communication transaction,
- the obtainer comprises a receiver configured to receive a session initiation protocol header containing the network identifiers of all involved parties,
- the detector comprises a checker configured to check whether any one of the obtained core network identifiers match with predetermined identities for being intercepted,
- if the apparatus is operable as a core network border element located on an originating side of the core network with respect to the communication transaction, the checker is configured to check core network identifiers of the originating party, and if the apparatus is operable as a core network border element located on a terminating side of the core network with respect to the communication transaction, the checker is configured to check core network identifiers of the terminating party,
- the detector comprises a gainer configured to gain information about the necessity of lawful interception from a control function element within the core network,
- the gainer comprises a receiver configured to receive a session initiation protocol header containing at least one of the necessity information and a flag indicating a necessity of lawful interception,
- if the detector is arranged at a signaling part of the apparatus, the apparatus further comprises an informer configured to inform a bearer part of the apparatus about the necessity of lawful interception, wherein the interception processor is arranged at the bearer part of the apparatus to perform lawful interception of bearer traffic in the communication transaction at the bearer part,
- if the apparatus is operable as a core network border element located on an originating side of the core network with respect to the communication transaction, the interception processor is configured to intercept bearer traffic of the originating party, and if the apparatus is operable as a core network border element located on a terminating side of the core network with respect to the communication transaction, the interception processor is configured to intercept bearer traffic of the terminating party, and/or
- the apparatus is operable as at least one of a combination of media gateway control function and a media gateway, a border control function and a border gateway function, and an interconnection border control function and a border gateway function.

According to one exemplary aspect of the present disclosure, there is provided a computer program product comprising program code means being arranged, when run on a processor of an apparatus, to perform the method according to the above-mentioned method and any one of its developments or modifications.

A solution according to the first focus thus provides that
- all core network identities of all involved parties of a communication transaction (e.g. SIP event/SIP session) are distributed in the core network to every intercepting core network border element e.g. by distributing them in appropriate SIP headers, and/or
- the core network border elements providing gateway functionality (like e.g. session border controller, session border gateway, media gateway controlling function, media gateway, etc.) provide lawful interception for signaling traffic and bearer traffic.

According to a second focus of the present disclosure, it is assumed that not every core network border element has interception capability and/or that even no core network border element providing gateway functionality is passed by traffic to be intercepted.

According to one exemplary aspect of the present disclosure, there is provided a method at a core network border element, comprising determining a capability of lawful interception, performing lawful interception of bearer traffic in a communication transaction, if determined to be capable, and delegating lawful interception of bearer traffic in a communication transaction to another element, if determined to be incapable.

According to further developments or modifications thereof, one or more of the following applies:
- the performing of lawful interception in case of determined capability further comprises detecting a necessity of lawful interception on the side of the core network with respect to the communication transaction on which the executing core network border element is located, and performing lawful interception of bearer traffic in a communication transaction on the own side, if a necessity is detected,
- the performing of lawful interception in case of determined capability further comprises establishing a correlation between lawful interception tasks at core network border elements belonging to the same communication transaction, and issuing an indication on the determined capability of lawful interception to another core network border element involved in the same communication transaction,

- the establishing of a lawful interception correlation and the issuing of a capability indication comprises at least one of using and/or hashing a session initiation call identifier, setting up a dedicated unique correlation identifier, and using a charging identifier, and further comprises sending the correlation identifier to another core network border element involved in the communication transaction,
- the indication comprises at least one dedicated flag in a correlation identifier,
- the performing of lawful interception in case of determined capability further comprises receiving an indication on a determined incapability of lawful interception from another core network border element involved in the communication transaction, which is located on the other side of the core network with respect to the communication transaction, detecting a necessity of lawful interception on the other side of the core network with respect to the communication transaction on which the other core network border element is located, and performing lawful interception of bearer traffic in a communication transaction on the other side, if a necessity is detected,
- the necessity detecting comprises checking whether any one of the core network identifiers of the respective side match with predetermined identities for being intercepted,
- the necessity detecting comprises gaining information about the necessity of lawful interception of the respective side from a control function element within the core network,
- the performing of lawful interception further comprises informing a bearer part of the core network border element about the necessity of lawful interception, wherein the lawful interception of bearer traffic in the communication transaction is performed at the bearer part of the core network border element,
- the performing of lawful interception in case of determined incapability further comprises establishing a correlation between lawful interception tasks at core network border elements belonging to the same communication transaction, and issuing an indication on the determined incapability of lawful interception to another core network border element involved in the same communication transaction,
- the core network is an internet protocol multimedia core network subsystem, and/or
- the core network border element comprises at least one of a combination of media gateway control function and a media gateway, a border control function and a border gateway function, an interconnection border control function and a border gateway function, and a control function element in case of the lack of an actual border element on the respective side in the communication transaction.

According to one exemplary aspect of the present disclosure, there is provided an apparatus being operable as a core network border element, comprising a determiner configured to determine a capability of lawful interception, an interception processor configured to perform lawful interception of bearer traffic in a communication transaction, if determined to be capable, and a delegation processor configured to delegate lawful interception of bearer traffic in a communication transaction to another element, if determined to be incapable.

According to further developments or modifications thereof, one or more of the following applies:
- the apparatus further comprises a detector configured to detect a necessity of lawful interception on the side of the core network with respect to the communication transaction on which the executing core network border element is located in case of determined capability, and wherein the interception processor is further configured to perform lawful interception of bearer traffic in a communication transaction on the own side, if a necessity is detected,
- the apparatus further comprises a correlator configured to establish a correlation between lawful interception tasks at core network border elements belonging to the same communication transaction in case of determined capability, and an indicator configured to issue an indication on the determined capability of lawful interception to another core network border element involved in the same communication transaction in case of determined capability,
- the correlator and the indicator are configured to establish a lawful interception correlation and to issue a capability indication by at least one of using and/or hashing a session initiation call identifier, setting up a dedicated unique correlation identifier, and using a charging identifier, and wherein the apparatus further comprises a transmitter configured to send the correlation identifier to another core network border element involved in the communication transaction,
- the indication comprises at least one dedicated flag in a correlation identifier,
- the apparatus further comprises a receiver configured to receive an indication on a determined incapability of lawful interception from another core network border element involved in the communication transaction, which is located on the other side of the core network with respect to the communication transaction, in case of determined capability, and a detector configured to detect a necessity of lawful interception on the other side of the core network with respect to the communication transaction on which the other core network border element is located, and wherein the interception processor is further configured to perform lawful interception of bearer traffic in a communication transaction on the other side, if a necessity is detected,
- the detector comprises a checker configured to check whether any one of the core network identifiers of the respective side match with predetermined identities for being intercepted,
- the detector comprises a gainer configured to gain information about the necessity of lawful interception of the respective side from a control function element within the core network,
- the apparatus further comprises an informer configured to inform a bearer part of the core network border element about the necessity of lawful interception, wherein the interception processor is arranged at the bearer part of the apparatus to perform lawful interception of bearer traffic in the communication transaction at the bearer part,
- the apparatus further comprises a correlator configured to establish a correlation between lawful interception tasks at core network border elements belonging to the same communication transaction in case of determined incapability, and an indicator configured to issue an indication on the determined incapability of lawful interception to another core network border element involved in the same communication transaction in case of determined incapability, and/or
- the apparatus is operable as at least one of a combination of media gateway control function and a media gateway, a border control function and a border gateway function, an interconnection border control function and a border gateway function, and a control function element in case of the lack of an actual border element on the respective side in the communication transaction.

According to one exemplary aspect of the present disclosure, there is provided a computer program product comprising program code means being arranged, when run on a processor of an apparatus, to perform the method according to the above-mentioned method and any one of its developments or modifications.

A solution according to the second focus thus provides that
- all core network identities of all involved parties of a communication transaction (e.g. SIP event/SIP session) are distributed in the core network to every intercepting core network border element e.g. by distributing them in appropriate SIP headers in both directions,
- the core network border elements providing gateway functionality (like e.g. session border controller, session border gateway, media gateway controlling function, media gateway, etc.) and having interception capabilities provide lawful interception for signaling traffic and bearer traffic,
- a lawful interception correlation is generated and distributed in both directions in order to allow the correlation of lawful interception tickets/tasks from different intercepting network elements, and/or
- this lawful interception correlation carries a flag indicating whether the access side sending the correlation needs assistance for intercepting bearer traffic.

By way of exemplary embodiments of the present invention, there is provided a teaching on how core network elements can be utilized to intercept bearer traffic to overcome gaps in the currently standardized provisions and to offer a lawful interception solution which is compliant with the regulatory requirements in most countries.

### Brief description of the drawings

In the following, the present disclosure will be described in greater detail by way of non-limiting examples with reference to the accompanying drawings, in which
Figure 1 shows a reference configuration for lawful interception according to 3GPP standardization for a circuit-switched domain access,
Figure 2 shows a reference configuration for lawful interception according to 3GPP standardization for a packet data multimedia service in the context of IMS,
Figure 3 shows a flow diagram of a generic method according to an embodiment of the present disclosure,
Figure 4 shows a flow diagram of a method according to an embodiment of the present disclosure,
Figure 5 shows an exemplary network configuration of a first use case according to embodiments of the present disclosure,
Figure 6 shows an exemplary network configuration of a second use case according to embodiments of the present disclosure,
Figure 7 shows a schematic block diagram of an apparatus according to an embodiment of the present disclosure,
Figure 8 shows a flow diagram of another generic method according to an embodiment of the present disclosure,
Figure 9 shows a flow diagram of another method according to an embodiment of the present disclosure,
Figure 10 shows an exemplary network configuration of a third use case according to embodiments of the present disclosure,
Figure 11 shows an exemplary network configuration of a fourth use case according to embodiments of the present disclosure,
Figure 12 shows a signaling diagram of a method in the third use case according to an embodiment of the present disclosure, and
Figure 13 shows a schematic block diagram of another apparatus according to an embodiment of the present disclosure.

### Detailed description of embodiments of the present invention

The present invention is described herein with reference to particular non-limiting examples. A person skilled in the art will appreciate that the invention is not limited to these examples, and may be more broadly applied.

In particular, the present invention and its embodiments are mainly described in relation to 3GPP specifications being used as non-limiting examples for certain exemplary network configurations. In particular, an IMS network environment with SIP-based traffic handling is used as a non-limiting example in this regard. As such, the description of the embodiments given herein specifically refers to terminology which is directly related thereto. Such terminology is only used in the context of the presented non-limiting examples, and does naturally not limit the invention in any way. Rather, any other network configuration or implementation may also be utilized as long as compliant with the features described herein.

In the following, various embodiments and implementations of the present disclosure and the present invention and its aspects are described using several alternatives. It is generally to be noted that, according to certain needs and constraints, all of the described alternatives may be provided alone or in any conceivable combination (also including combinations of individual features of the various alternatives).

### (First focus)

According to the present first focus, which constitutes a comparative example useful for understanding the present invention, it is assumed that the core network border elements are present at respective sides of a communication transaction (e.g. call, session, event or the like) and that these core network border elements have interception capabilities.

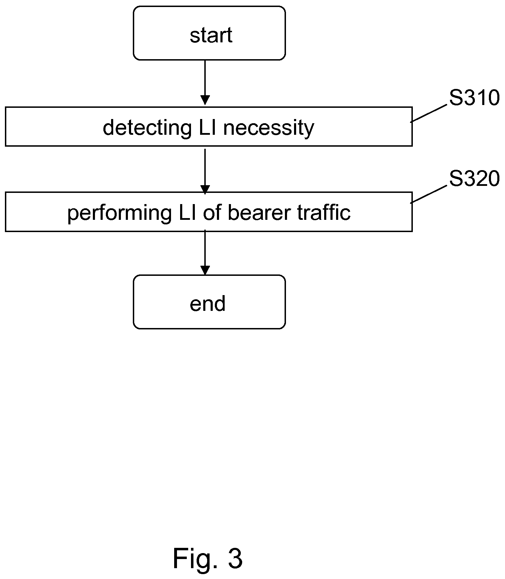

Figure 3 shows a flow diagram of a generic method according to an embodiment of the present disclosure.

In most generic terms, a method according to an embodiment of the present disclosure comprises a detection of a necessity of lawful interception (S310), and an execution of lawful interception of bearer traffic in a communication transaction (S320). According to the present embodiment, this method is performed at a core network border element such as an IMS border gateway element, e.g. a media gateway control function (MGCF) or a media gateway (MGW) or a combination thereof, a border control function (BCF) or a border gateway function (BGF) or a combination thereof, and an interconnection border control function (IBCF) or a border gateway function (BGF) or a combination thereof.

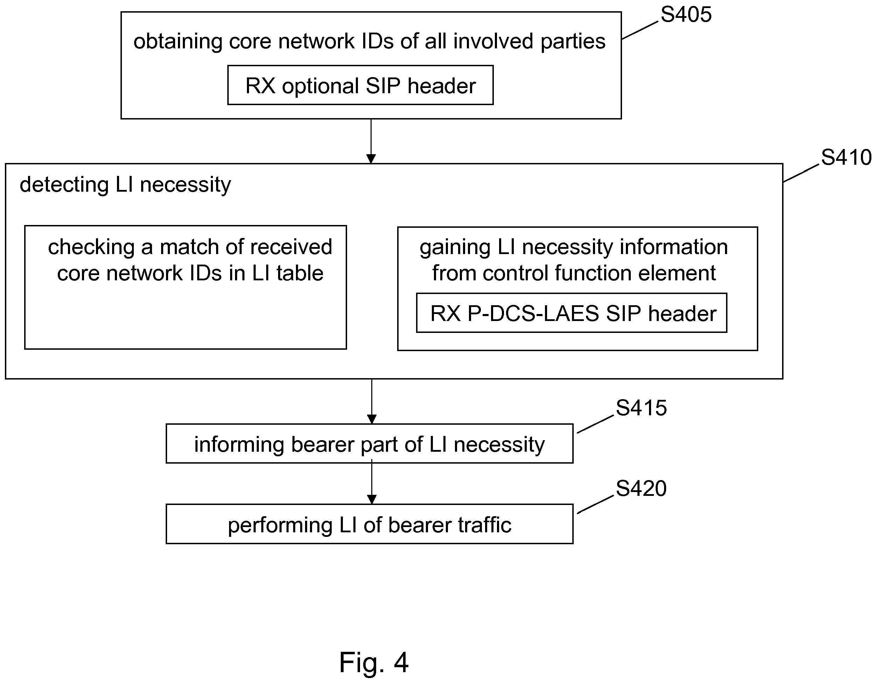

Figure 4 shows a flow diagram of a method according to an embodiment of the present disclosure. The thus depicted method may be regarded as a refinement of the method according to Figure 3.

According to the embodiment depicted in Figure 4, the identities of all subscribers involved in the communication transaction (e.g. call, session, event, or the like) in question are obtained at the executing core network border element so that they are available at the intercepting IMS node (s405). In the exemplary IMS environment, the subscribers are identified by SIP- or Tel-URLs.

The identities of all subscribers involved in the transaction thus need to be transferred to the IMS signaling border network elements (e.g. BCF, IBCF, MGCF). For transactions without call forwarding, this may be accomplished by general SIP handling (namely, on the originating side by way of a P-Asserted-Identity header, and on the terminating side by way of Request URI or the P-Called-Party-ID header. In other cases such as of call forwarding this handling needs to be extended, which can be done in different ways. According to the present embodiment, one of two optional SIP headers may for example be used, which are used to transfer the identities of forwarding parties. These are namely
- a diversion header (although outdated), or
- a history-info header (having replaced the diversion header in the meantime).

As a result, the intercepting nodes (i.e. the intercepting node at the originating side and the intercepting node at the terminating side, both of which may independently execute the method according to the present embodiment) receive all subscriber identities which are potentially to be intercepted.

The interception handling at the respective core network border elements according to the present embodiment is as follows.

The detection of a necessity of lawful interception (LI necessity) in procedure S410 (corresponding to S310 of Fig. 3) may be implemented in two ways.

On the one hand, it may be checked by the signaling network border element whether one of the obtained subscriber identities (e.g. one of the subscriber identities carried in thus transferred SIP headers), e.g. SIP- or Tel-URLs, matches with identities to be intercepted. Such identities to be intercepted may e.g. be previously stored in an interception target table at any involved network element. It is assumed here that the intercepted target subscribers are introduced in all relevant target tables, i.e. at the access network and in the core network (this is the usual case, when the LEA requests the operator to intercept a subject by all available means, therefore the target tables will always contain the same subjects). In this regard, in particular for call forwarding cases, also the history-info header and the diversion header need to be checked for matching as well.

In this case, if the core network border element in question is located on an originating side of the core network with respect to the communication transaction, core network identifiers of the originating party are checked, and otherwise, if the core network border element in question is located on a terminating side of the core network with respect to the communication transaction, core network identifiers of the terminating party are checked.

Namely, according to presented embodiments of the present disclosure, generally the same interception handling as defined in 3GPP standards for the P/S-CSCF is performed by the core network (e.g. IMS) signaling border network elements (e.g. MGCF, BCF, IBCF).

On the other hand, as an alternative to the above, it may also be the case that the core network border element in question gains information about the necessity of lawful interception (LI necessity) from a control function element within the core network, in case of IMS e.g. from P-CSCF or S-CSCF. That is, the border elements do not have to check by themselves whether or not the present call has to be intercepted, but e.g. the P/S-CSCF which detects that the call has to be intercepted informs the signaling border network elements (e.g. MGCF, BCF, IBCF) accordingly. According to regulatory requirements, this is done in an encrypted way.

For the purpose of informing a border element about LI necessity, either a P-DCS-LAES SIP header or a flag therein could be used. This header contains the address data of the LEA where to send the doubled interception data.

Either this header is only transferred when a call has to be intercepted, so that the existence of the SIP header (i.e. the receipt thereof at the border element) triggers the lawful interception. Then the whole traffic of all SIP interfaces where this header is transferred (e.g. Mw interface or reference point between two CSCFs, and/or IP multimedia subsystem service control interface or reference point (ISC) between an S-CSCF and an SIP application server) has to be encrypted (which may impact the system performance) due to regulatory requirements in order to hide the interception activity. Otherwise, the header may be extended by a flag indicating whether to intercept or not. This flag has to be encrypted as well due to the above mentioned regulatory requirements.

According to Figure 4, in procedure S415, the signaling border network element (e.g. MGCF, BCF, IBCF), or the signaling part of the respective border element, informs the bearer border network element (e.g. MGW, BGF), or the bearer part thereof, when a transaction is recognized to be intercepted. According to regulatory requirements, this is done in an encrypted form.

In step S420, when the bearer network element is instructed to intercept a transaction, LI is performed, i.e. a copy of the bearer data is sent to all LEAs which requested the interception of the subject subscriber.

In this case, if the core network border element in question is located on an originating side of the core network with respect to the communication transaction, bearer traffic of the originating party is intercepted, and otherwise, if the core network border element in question is located on a terminating side of the core network with respect to the communication transaction, bearer traffic of the terminating party is intercepted.

In the following, two typical, but non-limiting, use cases are discussed, in which embodiments of the present disclosure may be advantageously applied.

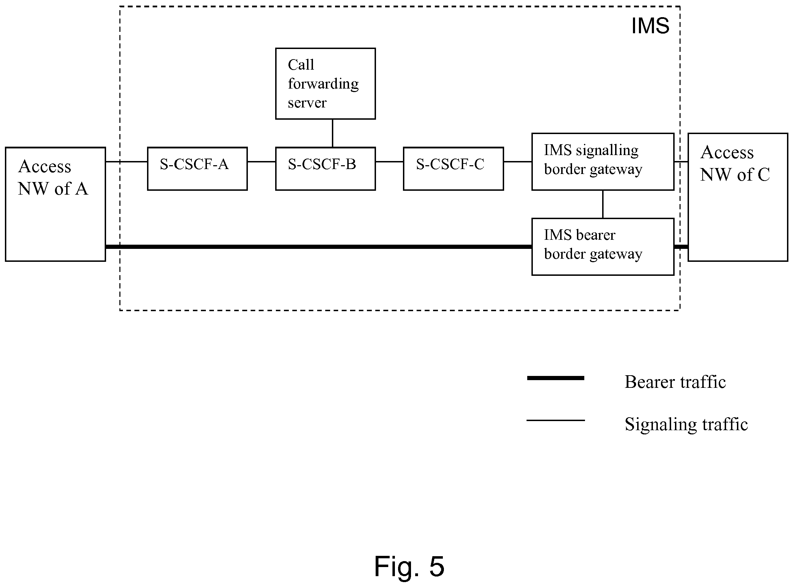

Figure 5 shows an exemplary network configuration of a first use case according to embodiments of the present disclosure.

In Figure 5, a call forwarding scenario as mentioned above is illustrated. The A-party being connected to core network IMS via its access network calls subscriber B which is to be intercepted. However, subscriber B forwards the call to subscriber C being connected via another access network to core network IMS. In the access network of subscriber C, only subscriber identities, e.g. MSISDN/IMSI/IMEI, of subscriber C are known. Therefore, there is no trigger that subscriber B has to be intercepted. To provide lawful interception, the IMS network elements are employed as described above to provide the interception not only of the SIP signaling (as the 3GPP standard defines), but also of the bearer traffic. In the case of call forwarding e.g. the MGCF/MGW or the BCF/BGF are exemplarily employed for interception.

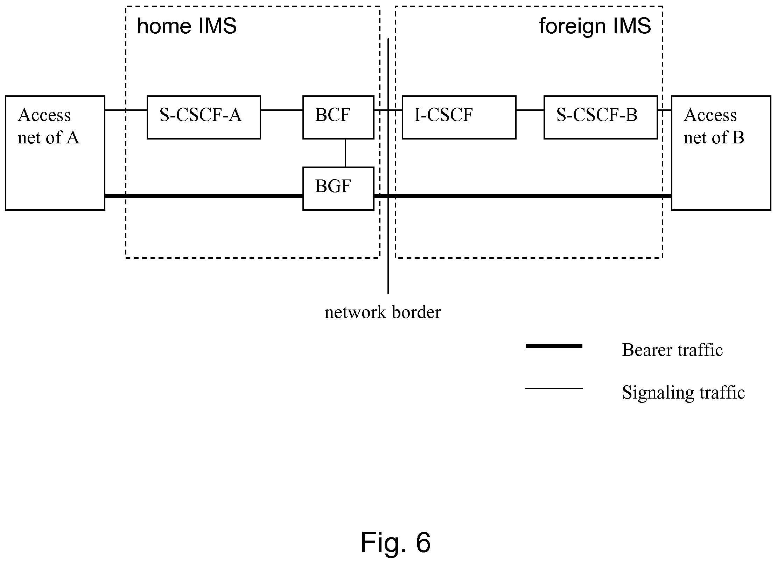

Figure 6 shows an exemplary network configuration of a second use case according to embodiments of the present disclosure.

In Figure 6, a core network interconnection scenario with a call towards a foreign IMS network as mentioned above is illustrated. The A-party associated with home core network IMS calls subscriber B, but subscriber B is in or associated with another (foreign) core network IMS. If this network does not belong to the same jurisdiction as the network of subscriber A, the LEA cannot force the operator of subscriber B to deliver interception data. To provide lawful interception, the IMS network elements are employed as described above to provide the interception not only of the SIP signaling (as the 3GPP standard defines), but also of the bearer traffic. In the case of network interconnection the IBCF/BGF is exemplarily employed for interception.

Although embodiments of the present focus have been described mainly with reference to methods, procedures and functions above, corresponding embodiments of the present focus also cover respective apparatuses, network nodes, including both software and hardware thereof.

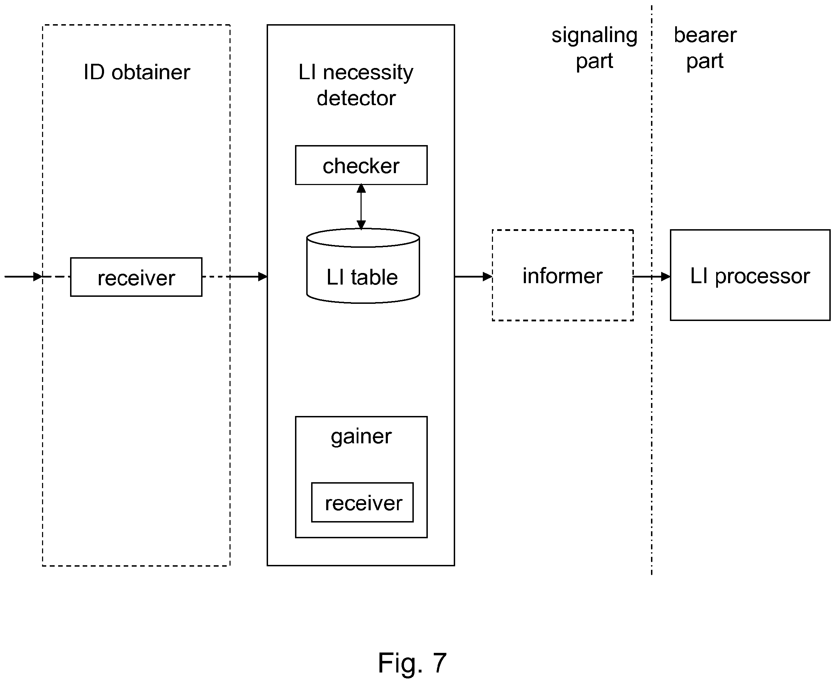

Figure 7 shows a schematic block diagram of an apparatus according to an embodiment of the present disclosure. In Figure 7, dashed line blocks are regarded to be optional. Also, the logical division of a signaling part and a bearer part of the thus depicted apparatus is to be regarded as optional. That is, no such division is essential, but otherwise the thus divided parts may also be implemented in distinct entities virtually thus representing an apparatus according to an embodiment of the present disclosure.

The solid line blocks are basically configured to perform the generic method according to Figure 3 above, and the entirety of solid line blocks and dashed line blocks are basically configured to perform the method according to Figure 4 above.

Namely, an LI necessity detector represents means for detecting a necessity of lawful interception, and an LI processor represents means for performing lawful interception of bearer traffic in a communication transaction. Further, an ID obtainer represents means for obtaining core network identifiers of all parties involved in the communication transaction. The ID obtainer optionally comprises a receiver representing means for receiving a session initiation protocol header, e.g. a history-info/division header, containing the network identifiers of all involved parties. The LI necessity detector comprises may comprise a checker representing means for checking whether any one of the obtained core network identifiers match with predetermined identities for being intercepted, which may be stored in an interception target table (LI table) held in a database or any other kind of storage means. Accordingly, if the apparatus is operable as a core network border element located on an originating side of the core network with respect to the communication transaction, the checker is configured to check core network identifiers of the originating party, and if the apparatus is operable as a core network border element located on a terminating side of the core network with respect to the communication transaction, the checker is configured to check core network identifiers of the terminating party. Alternatively or additionally, the LI necessity detector comprises may comprise a gainer representing means for gaining information about the necessity of lawful interception from a control function element within the core network, e.g. S-/P-CSCF, which gainer may further comprise a receiver representing means for receiving a session initiation protocol header, e.g. a P-DCS-LAES SIP header, containing at least one of the necessity information and a flag indicating a necessity of lawful interception. Further, the apparatus may comprise an informer representing means for informing a bearer part of the apparatus about the necessity of lawful interception, wherein the interception processor is then arranged at the bearer part of the apparatus to perform lawful interception of bearer traffic in the communication transaction at the bearer part. Hence, if the apparatus is operable as a core network border element located on an originating side of the core network with respect to the communication transaction, the interception processor is configured to intercept bearer traffic of the originating party, and if the apparatus is operable as a core network border element located on a terminating side of the core network with respect to the communication transaction, the interception processor is configured to intercept bearer traffic of the terminating party.

The thus depicted apparatus is operable as a core network border element, such as e.g. an IMS border element including at least one of a media gateway control function (MGCF) or a media gateway (MGW) or a combination thereof, a border control function (BCF) or a border gateway function (BGF) or a combination thereof, and an interconnection border control function (IBCF) or a border gateway function (BGF) or a combination thereof.
For details of the individual procedures of the single functional blocks or the whole apparatus, reference is made to the above-described methods.

Additionally, if the border element is not able to set up the correlation ID and/or flags (e.g. because it is a legacy network element, such as an old MGCF), then instead of this border element the S-CSCF can do so. The S-CSCF knows to which elements it is connected and can set up the correlation ID and/or flags accordingly.

### (Second focus)

According to the present second focus, which constitutes an embodiment of the present invention, it is assumed that not every core network border element has interception capability and/or that even no core network border element providing gateway functionality is passed by traffic to be intercepted. That is, further to a teaching of how core network elements can be utilized to intercept bearer traffic to overcome gaps in the currently standardized provisions and to offer a lawful interception solution which is compliant with the regulatory requirements in most countries, the present second focus provides an extension for the case that some border network elements do not have the capability of interception and/or are unaware of the need of interception and/or are out of the reach of the competent LEA, or that the border network elements are not passed due to shortcuts in the message path. Stated in other words, the present second focus relates to network configurations where interception capabilities at core network border elements are not implemented, or where traffic is terminated by a user agent client (UAC) or a user agent server (UAS) without passing a core network border element.

Hence, there is proposed a mechanism how both sides (i.e. originating side and terminating side of a core network such as e.g. an IMS network) may "help" / "support" / "assist" each other, if one of them is not able to intercept the call content for some reasons. That means that the originating side may intercept the call content on behalf of the terminating side, and the terminating side may intercept the call content on behalf of the originating side. In this regard, a SIP information element "able to intercept" (indicating an LI capability of one side, i.e. the border element on one side of the core network) may be introduced for exchanging LI capability information between the sides.

One problem in this regard is that, according to the current standards, at the originating access network side interception is based on the identities of the originating party (in CS/PS domain e.g. MSISDN or IMSI or IMEI), and at the terminating access network side interception is based on the identities of the terminating party.

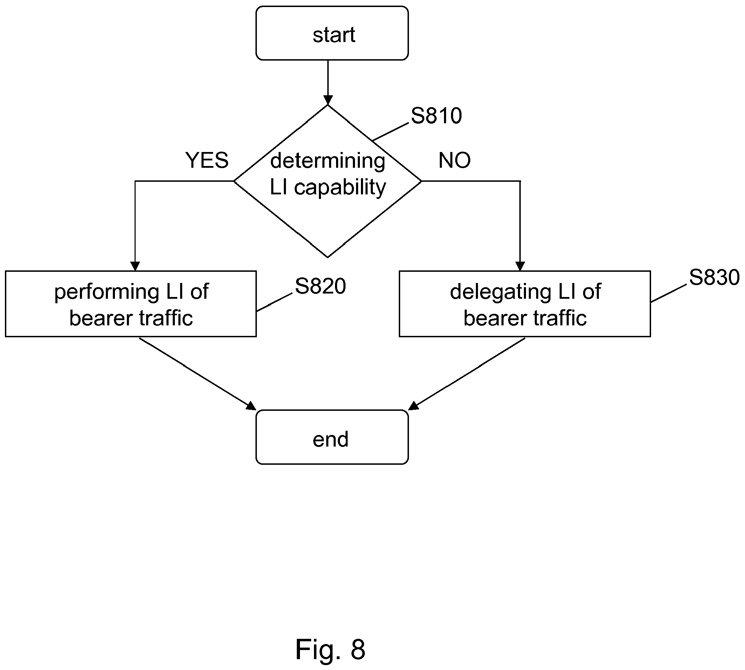

Figure 8 shows a flow diagram of a generic method according to an embodiment of the present invention.

In most generic terms, a method according to an embodiment of the present invention comprises a determination of a capability of lawful interception (S810), and an execution of lawful interception of bearer traffic in a communication transaction at the present element or at another element to which the LI execution is delegated in dependence of the determination result (S820 and S830). Namely, if determined to be capable, the element executing the present method performs LI by itself (S820). Otherwise, if determined to be incapable, the element executing the present method delegates the execution of LI to another element (S830). According to the present embodiment, this method is performed at a core network border element such as an IMS border gateway element, e.g. a media gateway control function (MGCF) or a media gateway (MGW) or a combination thereof, a border control function (BCF) or a border gateway function (BGF) or a combination thereof, an interconnection border control function (IBCF) or a border gateway function (BGF) or a combination thereof, and a control function element, e.g. S-/P-CSCF, in case of the lack of an actual border element on the respective side in the communication transaction.

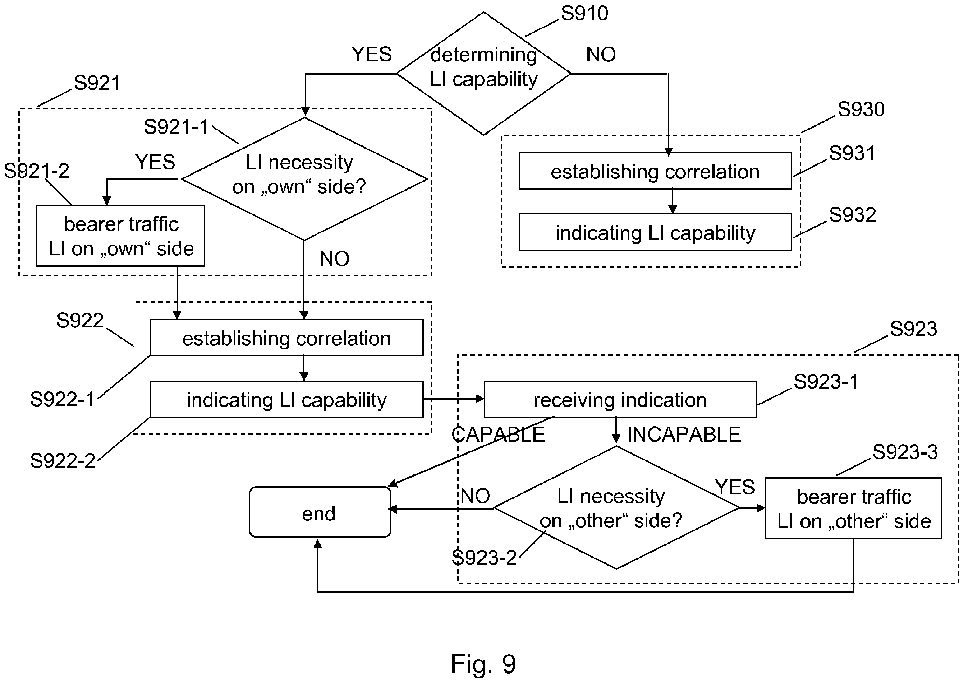

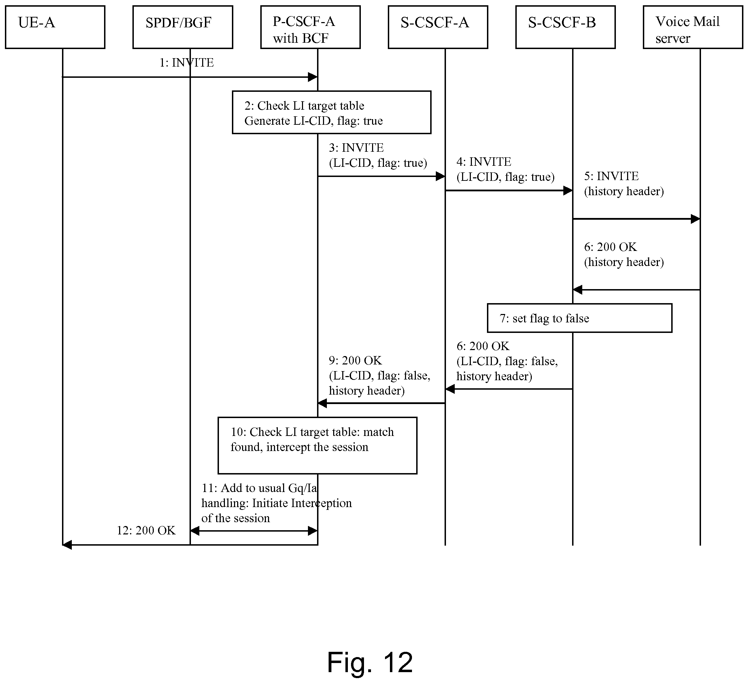

Figure 9 shows a flow diagram of a method according to an embodiment of the present invention. For details of the thus illustrated method in the context of a specific example use case, reference is made to Figure 12.

According to the embodiment depicted in Figure 9, a core network border element in question determines its capability for performing lawful interception (S910), i.e. whether it has LI facilities implemented and/whether it is located on a message path of a certain transaction (e.g. call, session, event, or the like).

On the one hand, if an LI capability is determined (YES in S910), LI execution (S920; see S820 in Fig. 8) comprises the following procedures. In general terms, these may be at least one of LI execution for the own side (S921), LI correlation identification (S922), and LI execution for another side (S923).

First, in procedure S921, it is detected whether a lawful interception is necessary with respect to the own side of the core network (S921-1), i.e. that side on which the executing element is located. For example, if a border element at the originating side receives a SIP message, it is LI necessity at the originating side is detected on the basis of the core network identities if the originating party. If a necessity is detected in S921-1, lawful interception of bearer traffic in the respective communication transaction on the own side is performed (S921-2). For details of LI execution at a core network border element, reference is made to the above description of the first focus.

Then, if no LI on the own side is detected to be necessary or after a corresponding LI execution, a correlation between lawful interception tasks at core network border elements belonging to the same communication transaction is established (S922-1), and
an indication on the determined capability of lawful interception is issued to another core network border element involved in the same communication transaction (S922-2).

For this purpose, a lawful interception correlation identifier (LI-CID) is introduced, which serves
- to correlate LI tickets belonging to one session/event generated at different network elements, and
- to indicate whether the sending side (i.e. in messages/responses send from A->B the originating side, in messages/responses send from B->A the terminating side) is able (or whether there are doubts whether the sending side is able) to intercept the bearer traffic.

The LI-CID thus logically consists of two parts:
- a correlation part, and
- a LI capability flag.

The correlation part needs is unique for a certain time period. This can be achieved e.g. either by using and/or hashing a SIP Call ID (which is an already existing ID being unique for a session/event), or by setting up a new defined unique correlation ID, or by using an already existing ICID (IMS charging identifier) in the P-Charging vector header as correlation part of the LI-CID.

A capability flag indicates whether the sending side is able (or whether there are doubts whether the sending side is able) to intercept the bearer traffic.

The LI-CID (LI capability information) is transferred from end-to-end in both directions (which will be evident from the signaling diagram of Figure 12 below). It is set up by the first network element of the originating side. The last network element of the terminating side (or, stated in other words, the first network element in the backward SIP message flow) may alter the "able to intercept flag" according to the abilities of the terminating side. It is up to the implementation whether there is only one flag used with different meanings depending in which direction it is sent (regarding the interception capabilities of either the A- or the B-party) or whether two different flags are used (one for each direction).

With respect to the above-mentioned correlation identifier, the following options are available for performance enhancement.

Firstly, the correlation identifier LI-CID may be generated by using and/or hashing a SIP call ID. Such an LI-CID is set up only, when the SIP call ID changes, i.e. when a back-to-back user agent (B2BUA) is in the SIP path. This can be done by the S-CSCF which recognizes that the addressed SIP application server is a B2BUA.

Secondly, the "able to intercept flag" is not used in the backward direction of the SIP path. Instead, the information "able to intercept" is coded by the existence of the history-info/diversion header. If the history-info/diversion header is sent in a backward direction, then the B-side is unable to intercept and, vice versa, if the history-info/diversion header is not sent in a backward direction, then the B-side is able to intercept

Thirdly, alternatively to using one flag, two flags may equally well be used for the same purpose. Namely, instead of the above-mentioned "able to intercept flag" of originating or terminating side, one flag "need_LI_help" (true or false) of originating or terminating side and one flag "can_LI_help" (true or false) of terminating or originating side may be used. These flags would be signaled to the respective opposite side, and indicate whether the own side needs support from the opposite side, and whether the own side may support the opposite side by bearer interception.

Returning to Figure 9, the core network border element executing the method illustrated in Figure 9 may also receive an indication from another element (S923-1), i.e. from a core network side other than the own side, e.g. from the terminating side when the present border element is located on the originating side. If the received LI-CID flag indicates that the other side is able to perform lawful interception by itself, the process terminates. Otherwise, if the received LI-CID flag indicates that the other side is not able to perform lawful interception by itself, it is detected whether a lawful interception is necessary with respect to the other side of the core network (S923-4), i.e. that side on which the executing element is not located. If a necessity is detected in S923-2, lawful interception of bearer traffic in the respective communication transaction on the other side is performed (S923-3). For details of LI execution at a core network border element, reference is made to the above description of the first focus.

That is, if at the executing core network border element being located on one side of the core network with respect to the communication transaction its own capability is determined and an incapability of another core network border element is indicated, bearer traffic of the one side's party may be intercepted and bearer traffic of the other side's party may be intercepted on behalf of the other core network border element.

On the other hand, if an LI incapability is determined (NO in S910), LI execution is delegated to another core network border element having LI capability (S930; see S830 in Fig. 8). Then, a correlation between lawful interception tasks at core network border elements belonging to the same communication transaction is established (S931), and an indication on the determined incapability of lawful interception is issued to another core network border element involved in the same communication transaction (S932). For this purpose, a lawful interception correlation identifier (LI-CID) is introduced, as described above.

Although not described in detail above, the general teaching of lawful interception at core network border elements according to the first focus also applies here in all its details and alternatives.

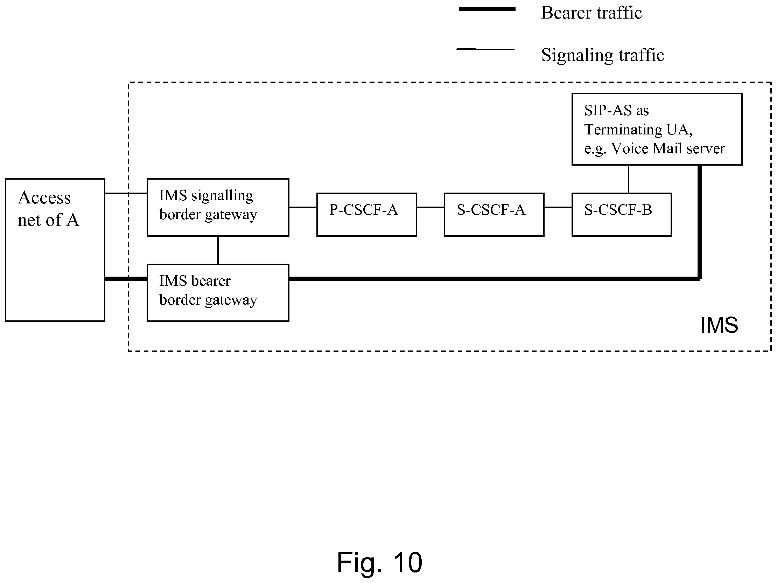

Figure 10 shows an exemplary network configuration of a third use case according to embodiments of the present invention.

In Figure 10, a call forwarding scenario as mentioned above is illustrated. The A-party being connected to core network IMS via its access network calls subscriber B which is to be intercepted. However, subscriber B forwards the call to a voice mail server exemplarily being implemented as a SIP application server (SIP-AS), thus representing the terminating user agent of the present call. Hence, at the terminating side, the bearer traffic does not pass any network element capable of lawful interception. Therefore, there is no chance that subscriber B can be intercepted at the terminating side. To provide lawful interception, the IMS network elements on the originating side are employed as described above to provide the interception not only of the SIP signaling (as the 3GPP standard defines), but also of the bearer traffic. In the case of call forwarding e.g. the MGCF/MGW or the BCF/BGF are exemplarily employed for interception, and in the case of network interconnection the IBCF/BGF is exemplarily employed for interception.

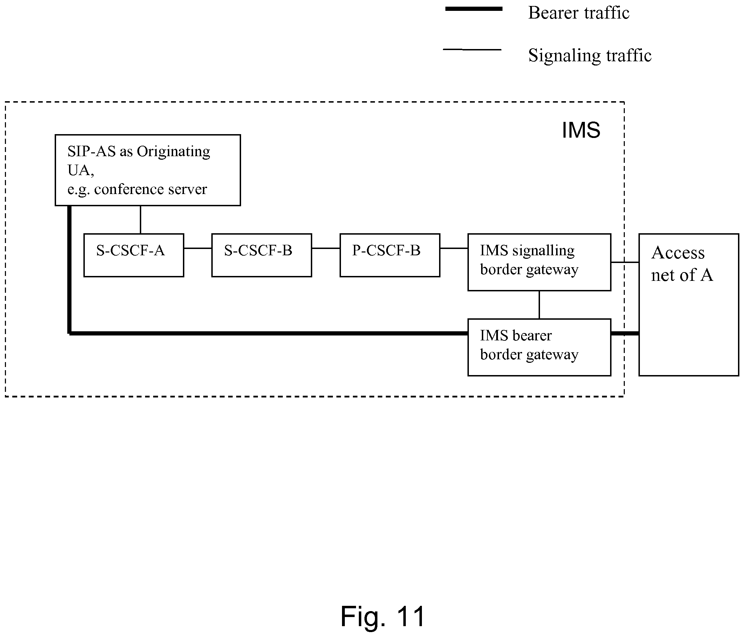

Figure 11 shows an exemplary network configuration of a fourth use case according to embodiments of the present invention.

In Figure 11, a scenario of a call being initiated by a SIP application server (SIP-AS) is illustrated. This application server representing the originating user agent may for example be a conference server acting on behalf of a user A that is to be intercepted. Hence, at the originating side of the core network IMS, the bearer traffic does not pass any network element capable of lawful interception. Therefore, there is no chance that user A can be intercepted at the originating side. To provide lawful interception, the IMS network elements on the terminating side are employed as described above to provide the interception not only of the SIP signaling (as the 3GPP standard defines), but also of the bearer traffic. In the case of call forwarding e.g. the MGCF/MGW or the BCF/BGF are exemplarily employed for interception, and in the case of network interconnection the IBCF/BGF is exemplarily employed for interception.

Figure 12 shows an exemplary network configuration of a fourth use case according to embodiments of the present invention.

In Figure 12, the message flow of a typical scenario is shown. The following steps of interception handling of the border network elements have to be performed.

In step 1, the user equipment of subscriber A UE-A sends an SIP INVITE message to the corresponding P-CSCF of subscriber A, which has BCF functionality. In step 2, according to current standards, at the originating side the identifiers of the originating party (e.g. in the From header and/or in the P-Asserted-ID header) are checked for matches with a pre-stored LI target table. In the present example, no match is assumed to be found, thus no LI necessity being detected.

The P-CSCF is the first IMS network element involved in the SIP signaling path and therefore generates an LI-CID. Because the network configuration and the access network used by the user equipment UE-A is known to the P-CSCF, it can decide whether the IMS network border elements are able to intercept the bearer traffic or not (i.e. LI capability determination). In this exemplary message flow, the P-CSCF sets the "able to intercept flag" in the LI-CID to true, thus indicating that the originating side is able to perform interception.

It is to be noted that, if for some reasons the first network element in the SIP signaling path is not able to generate an LI-CID (e.g. in the case of a SIP-AS-initiated call, where a third-party-SIP-AS is not able to set up an LI-CID) the next network element which is able to generate an LI-CID generates the LI correlation identifier instead.

In steps 3 and 4, the SIP INVITE message with the LI-CID flag being set to true is forwarded to the S-CSCF of subscriber B. The S-CSCF of subscriber B removes the LI-CID and forwards the SIP INVITE message to the Voice Mail server acting as terminating user agent (step 5). In step 6, the voice mail server answers with 200 OK, and in step 7, the S-CSCF subscriber B recognizes that the Voice mail server (SIP-AS) acts as a terminating user agent. The S-CSCF of subscriber B sets the "able to intercept flag" in the LI-CID to false.

In steps 8 and 9, the 200 OK message with the LI-CID flag being set to false is forwarded to the P-CSCF of subscriber A.

In step 10, because the "able to intercept flag" is set to false, it is clear that the terminating side is unable to perform lawful interception. Therefore, the P-CSCF checks all identifiers of the terminating party (e.g. in the To header, in the P-Called-Party-Id header, in the Request URI and in the history-info/diversion header) whether they match with the identities pre-stored in the target table. This includes also the subscriber identities of the terminating side, i.e. including the history-info header and the diversion header. In this example, it is found that the B-party has to be intercepted.

Then, in step 11, because the call was recognized to be intercepted, the P-CSCF intercepts the signaling traffic and informs the BGF that the bearer of the call has to be intercepted (according to regulatory requirements, this has to be done in an encrypted form), i.e. that a copy of the bearer data has to be sent to all LEAs which requested the interception of the subject. In step 12, the 200 OK message is forwarded to the user equipment UE-A, after the LI-CID is removed therefrom.

According to current standards, at the originating side the identifiers of the originating party and at the terminating side the identifiers of the terminating party are checked for matches with a LI target table. However, here it is proposed that under certain circumstances the originating side also checks for the terminating subscribers and, vice versa, the terminating side also checks for the originating subscribers. Accordingly, core network border elements either at the originating side or at the terminating side need to be able to perform interception.

According to the second focus, it is especially beneficial that no secret data, as e.g. the information whether a subscriber has to be intercepted or not, is transferred via the Mw interface between two CSCFs. Thus, the Mw interface does not need to be encrypted. Further, the transfer of the "able to intercept flag" avoids double interception (at originating and terminating side at the same time), which would be accepted by the LEA only in exceptional cases.

It is to be noted that the term "core network border element" according to the second focus described above does not only comprise the actual border gateway elements of the core network (e.g. MGCF/MGW, BCF/BGF, IBCF/BGF), but also the first/last network elements of the message path in the core network, which are able to generate LI-CID as described above.

Although embodiments of the present focus have been described mainly with reference to methods, procedures and functions above, corresponding embodiments of the present focus also cover respective apparatuses, network nodes, including both software and hardware thereof.

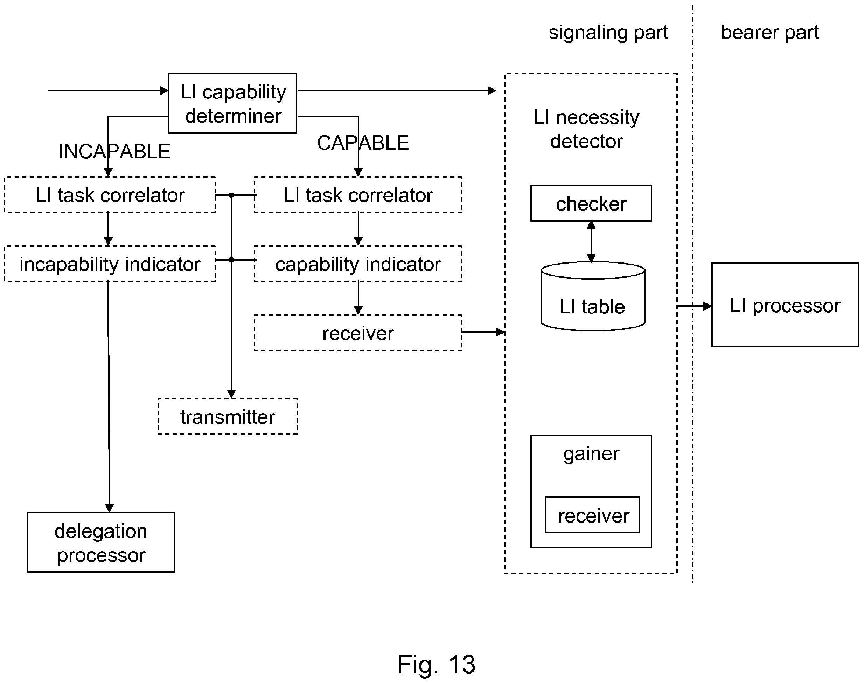

Figure 13 shows a schematic block diagram of another apparatus according to an embodiment of the present invention. In Figure 13, dashed line blocks are regarded to be optional. Also, the logical division of a signaling part and a bearer part of the thus depicted apparatus is to be regarded as optional. That is, no such division is essential, but otherwise the thus divided parts may also be implemented in distinct entities virtually thus representing an apparatus according to an embodiment of the present invention.

The solid line blocks are basically configured to perform the generic method according to Figure 8 above, and the entirety of solid line blocks and dashed line blocks are basically configured to perform the method according to Figure 9 above.

Namely, an LI capability determiner represents means for determining a capability of lawful interception, an LI processor represents means for performing lawful interception of bearer traffic in a communication transaction, if determined to be capable, and a delegation processor represents means for (logically/virtually) delegating lawful interception of bearer traffic in a communication transaction to another element, if determined to be incapable.

The apparatus may comprise an LI necessity detector representing means for detecting a necessity of lawful interception on the side of the core network with respect to the communication transaction on which the executing core network border element is located in case of determined capability, wherein the LI processor is further configured to perform lawful interception of bearer traffic in a communication transaction on the own side, if a necessity is detected.

The apparatus may also comprise an LI task correlator representing means for establishing a correlation between lawful interception tasks at core network border elements belonging to the same communication transaction in case of determined capability, an a capability indicator configured to issue an indication on the determined capability of lawful interception to another core network border element involved in the same communication transaction in case of determined capability. Similarly, the apparatus may also comprise an LI task correlator representing means for establishing a correlation between lawful interception tasks at core network border elements belonging to the same communication transaction in case of determined incapability, and an incapability indicator configured to issue an indication on the determined incapability of lawful interception to another core network border element involved in the same communication transaction in case of determined incapability. Although depicted separately in Figure 13, the LI task correlation functionality and/or the in-/capability indication functionality may be implemented by a single functional block operating for both cases, i.e. LI capability and LI incapability.

The LI task correlator(s) and the capability/incapability indicator(s) are configured to establish a lawful interception correlation and to issue a capability indication by at least one of using and/or hashing a session initiation call identifier, setting up a dedicated unique correlation identifier, and using a charging identifier. Hence, the apparatus may further comprise a transmitter representing means for sending the correlation identifier to another core network border element involved in the communication transaction. The thus mentioned correlation identifier may preferably be the LI-CID data structure discussed beforehand.

The apparatus may further comprise a receiver representing means for receiving an indication on a determined in-/capability of lawful interception from another core network border element involved in the communication transaction, which is located on the other side of the core network with respect to the communication transaction, in case of determined capability of the present apparatus. If such an indication is received, the LI necessity detector and the LI processor operate as outlined above, however with respect to the "other side" instead of the "own side". To this end, alternatively to the same LI necessity detector and LI processor being used for the own and the other side (as exemplarily depicted in Figure 13), separate entities may be provided for these operations, respectively. Although omitted in Figure 13, the apparatus may also comprise an informer as e.g. depicted in Figure 7.

The thus depicted apparatus is operable as a core network border element, such as e.g. an IMS border element including at least one of a media gateway control function (MGCF) or a media gateway (MGW) or a combination thereof, a border control function (BCF) or a border gateway function (BGF) or a combination thereof, an interconnection border control function (IBCF) or a border gateway function (BGF) or a combination thereof, and a control function element, e.g. S-/P-CSCF, in case of the lack of an actual border element on the respective side in the communication transaction (cf. right hand side of Figure 12, for example).

For details of the individual procedures of the single functional blocks or the whole apparatus, reference is made to the above-described methods.

For the above block diagrams of Figures 7 and 13, the following is to be noted. The individual blocks are meant to illustrate respective functional blocks implementing a respective function, process or procedure, respectively. Such functional blocks are implementation-independent, i.e. may be implemented by means of any kind of hardware or software, respectively. The lines interconnecting individual blocks are meant to illustrate an operational coupling there-between, which on the one hand is implementation-independent (e.g. wired or wireless) and on the other hand may also comprise an arbitrary number of intermediary functional entities not shown.

In Figures 7 and 13, only those functional blocks are illustrated, which relate to any one of the above-described methods, procedures and functions. A skilled person is deemed to acknowledge the presence of any other conventional functional blocks required for an operation of respective structural arrangements, such as e.g. a power supply, a central processing unit or the like.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Furthermore, method steps and functions likely to be implemented as software code portions and being run using a processor at one of the entities are software code independent and can be specified using any known or future developed programming language such as e.g. Java, C++, C, and Assembler. Method steps and/or devices or means likely to be implemented as hardware components at one of the entities are hardware independent and can be implemented using any known or future developed hardware technology or any hybrids of these, such as MOS, CMOS, BiCMOS, ECL, TTL, etc, using for example ASIC components or DSP components, as an example. Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to those skilled in the art.

Software in the sense of the present description comprises software code as such comprising code means for performing the respective functions, as well as software (or a computer program or a computer program product) embodied on a tangible medium such as a computer-readable storage medium having stored thereon a respective data structure or code portions or embodied in a signal or in a chip, potentially during processing thereof.

Generally, for the purpose of the present invention as described herein above, it should be noted that
- an access technology may be any technology by means of which a user equipment can access an access network (e.g. via a base station or generally an access node). Any present or future technology, such as WLAN (Wireless Local Access Network), WiMAX (Worldwide Interoperability for Microwave Access), BlueTooth, Infrared, and the like may be used; although the above technologies are mostly wireless access technologies, e.g. in different radio spectra, access technology in the sense of the present invention may also imply wirebound technologies, e.g. IP based access technologies like cable networks or fixed lines but also circuits switched access technologies; access technologies may be distinguishable in at least two categories or access domains such as packet switched and circuit switched, but the existence of more than two access domains does not impede the invention being applied thereto,
- an access network may be any device, apparatus, unit or means by which a station, entity or other user equipment may connect to and/or utilize services offered by the access network; such services include, among others, data and/or (audio-) visual communication, data download etc.;
- a user equipment may be any device, apparatus, unit or means by which a system user may experience services from an access network such as a mobile phone, personal digital assistant PDA, or computer;
- method steps likely to be implemented as software code portions and being run using a processor at a network element or terminal (as examples of devices, apparatuses and/or modules thereof, or as examples of entities including apparatuses and/or modules therefor), are software code independent and can be specified using any known or future developed programming language as long as the functionality defined by the method steps is preserved;
- generally, any method step is suitable to be implemented as software or by hardware without changing the idea of the invention in terms of the functionality implemented;
- method steps and/or devices, apparatuses, units or means likely to be implemented as hardware components at a terminal or network element, or any module(s) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components; in addition, any method steps and/or devices, units or means likely to be implemented as software components may for example be based on any security architecture capable e.g. of authentication, authorization, keying and/or traffic protection;
- devices, apparatuses, units or means can be implemented as individual devices, apparatuses, units or means, but this does not exclude that they are implemented in a distributed fashion throughout the system, as long as the functionality of the device, apparatus, unit or means is preserved,
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

The present invention also covers any conceivable combination of method steps and operations described above, and any conceivable combination of nodes, apparatuses, modules or elements described above, as long as the above-described concepts of methodology and structural arrangement are applicable.

There are e.g. provided extended provisions of lawful interception of bearer traffic. One corresponding method is operable at a core network border element, and comprises detecting a necessity of lawful interception, and performing lawful interception of bearer traffic in a communication transaction. Another corresponding method is operable at a core network border element, and comprises determining a capability of lawful interception, performing lawful interception of bearer traffic in a communication transaction, if determined to be capable and delegating lawful interception of bearer traffic in a communication transaction to another element, if determined to be incapable.

Even though the invention is described above with reference to the examples according to the accompanying drawings, it is to be understood that the invention is not restricted thereto. Rather, it is apparent to those skilled in the art that the present invention can be modified in many ways without departing from the scope of the inventive idea as disclosed herein.

## Claims

1. A method at a core network border element, comprising
determining a capability of lawful interception (S910),
establishing a correlation between lawful interception tasks at core network border elements belonging to the same communication transaction (S931, S922-1),
performing lawful interception of bearer traffic in a communication transaction (S921-2), if determined to be capable, said performing comprising
detecting, at a signaling part of the core network border element, a necessity of lawful interception on the side of the core network with respect to the communication transaction, on which the executing core network border element is located,
informing a bearer part of the core network border element about the necessity of lawful interception,
performing, at the bearer part of the core network border element, lawful interception of bearer traffic in a communication transaction on said side of the core network, and
issuing an indication on the determined capability of lawful interception to another core network border element involved in the same communication transaction, and
delegating lawful interception of bearer traffic in a communication transaction to another element (S923-3), if determined to be incapable, said delegating comprising
issuing an indication on the determined incapability of lawful interception to another core network border element involved in the same communication transaction.

2. The method according to claim 1, wherein the establishing of a lawful interception correlation and the issuing of a capability indication comprises at least one of using and/or hashing a session initiation call identifier, setting up a dedicated unique correlation identifier, and using a charging identifier, and further comprises sending the correlation identifier to another core network border element involved in the communication transaction.

3. The method according to claim 1 or 2, wherein the indication comprises at least one dedicated flag in a correlation identifier.

4. The method according to any one of claims 1 to 3, wherein the performing of lawful interception in case of determined capability further comprises
receiving an indication on a determined incapability of lawful interception from another core network border element involved in the communication transaction, which is located on the other side of the core network with respect to the communication transaction,
detecting a necessity of lawful interception on the other side of the core network with respect to the communication transaction on which the other core network border element is located, and
performing lawful interception of bearer traffic in a communication transaction on the other side, if a necessity is detected.

5. The method according to claim 1 or 4, wherein the necessity detecting comprises
checking whether any one of the core network identifiers of the respective side match with predetermined identities for being intercepted.

6. The method according to claim 1 or 4, wherein the necessity detecting comprises
gaining information about the necessity of lawful interception of the respective side from a control function element within the core network.

7. The method according to any one of claims 1 to 6, wherein the performing of lawful interception in case of determined incapability further comprises
establishing a correlation between lawful interception tasks at core network border elements belonging to the same communication transaction, and
issuing an indication on the determined incapability of lawful interception to another core network border element involved in the same communication transaction.

8. The method according to any one of claims 1 to 7, wherein the core network is an internet protocol multimedia core network subsystem.

9. The method according to claim 8, wherein the core network border element comprises at least one of a combination of media gateway control function and a media gateway, a border control function and a border gateway function, an interconnection border control function and a border gateway function, and a control function element in case of the lack of an actual border element on the respective side in the communication transaction.

10. An apparatus being operable as a core network border element, comprising
a determiner configured to determine a capability of lawful interception (S910),
a correlator configured to establish a correlation between lawful interception tasks at core network border elements belonging to the same communication transaction (S931, S922-1),
a detector, arranged at a signaling part of the apparatus, configured to detect a necessity of lawful interception on the side of the core network with respect to the communication transaction (S921-2), on which the executing core network border element is located in case of determined capability,
an informer configured to inform a bearer part of the apparatus about the necessity of lawful interception,
an interception processor, arranged at the bearer part of the apparatus, configured to perform lawful interception of bearer traffic in a communication transaction on said side of the core network in case of determined capability,
a delegation processor configured to delegate lawful interception of bearer traffic in a communication transaction to another element in case of determined incapability, and
an indicator configured to issue an indication on the determined capability or incapability of lawful interception to another core network border element involved in the same communication transaction (S932, S922-2).

11. The apparatus according to claim 10, wherein the correlator and the indicator are configured to establish a lawful interception correlation and to issue a capability indication by at least one of using and/or hashing a session initiation call identifier, setting up a dedicated unique correlation identifier, and using a charging identifier, and
wherein the apparatus further comprises a transmitter configured to send the correlation identifier to another core network border element involved in the communication transaction.

12. The apparatus according to claim 10 or 11, wherein the indication comprises at least one dedicated flag in a correlation identifier.

13. The apparatus according to any one of claims 10 to 12, further comprising
a receiver configured to receive an indication on a determined incapability of lawful interception from another core network border element involved in the communication transaction, which is located on the other side of the core network with respect to the communication transaction, in case of determined capability, and
a detector configured to detect a necessity of lawful interception on the other side of the core network with respect to the communication transaction on which the other core network border element is located, and
wherein the interception processor is further configured to perform lawful interception of bearer traffic in a communication transaction on the other side, if a necessity is detected.

14. The apparatus according to claim 10 or 13, wherein the detector comprises
a checker configured to check whether any one of the core network identifiers of the respective side match with predetermined identities for being intercepted.

15. The apparatus according to claim 10 or 13, wherein the detector comprises
a gainer configured to gain information about the necessity of lawful interception of the respective side from a control function element within the core network.

16. The apparatus according to any one of claims 10 to 15, further comprising
a correlator configured to establish a correlation between lawful interception tasks at core network border elements belonging to the same communication transaction in case of determined incapability, and
an indicator configured to issue an indication on the determined incapability of lawful interception to another core network border element involved in the same communication transaction in case of determined incapability.

17. The apparatus according to any one of claims 10 to 16, wherein the apparatus is operable as at least one of a combination of media gateway control function and a media gateway, a border control function and a border gateway function, an interconnection border control function and a border gateway function, and a control function element in case of the lack of an actual border element on the respective side in the communication transaction.

## Patentansprüche

1. Verfahren an einem Kernnetzwerk-Grenzelement, das Folgendes umfasst:
Feststellen einer Fähigkeit von rechtmäßiger Überwachung (S910), Einrichten einer Korrelation zwischen rechtmäßigen Überwachungsaufgaben an Kernnetzwerk-Grenzelementen, die zu der gleichen Kommunikationstransaktion (S931, S922-1) gehören,
Durchführen von rechtmäßiger Überwachung von Trägerverkehr in einer Kommunikationstransaktion (S921-2), falls als fähig festgestellt, wobei das Durchführen Folgendes umfasst:
Erfassen, an einem Signalisierungsteil des Kernnetzwerk-Grenzelements, einer Notwendigkeit von rechtmäßiger Überwachung auf der Seite des Kernnetzwerks in Bezug auf die Kommunikationstransaktion, auf der das ausführende Kernnetzwerk-Grenzelement angeordnet ist,
Informieren eines Trägerteils des Kernnetzwerk-Grenzelements über die Notwendigkeit von rechtmäßiger Überwachung,
Durchführen, an dem Trägerteil des Kernnetzwerk-Grenzelements, von rechtmäßiger Überwachung von Trägerverkehr in einer Kommunikationstransaktion auf der Seite des Kernnetzwerks, und
Ausgeben einer Angabe zu der bestimmten Fähigkeit von rechtmäßiger Überwachung an ein anderes Kernnetzwerk-Grenzelement, das an der gleichen Kommunikationstransaktion beteiligt ist, und
Delegieren von rechtmäßiger Überwachung von Trägerverkehr in einer Kommunikationstransaktion zu einem anderen Element (S923-3), falls als unfähig festgestellt, wobei das Delegieren das Ausgeben einer Angabe zu der festgestellten Unfähigkeit von rechtmäßiger Überwachung an ein anderes Kernnetzwerk-Grenzelement, das an der gleichen Kommunikationstransaktion beteiligt ist, umfasst.

2. Verfahren gemäß Anspruch 1, wobei das Einrichten einer rechtmäßigen Überwachungskorrelation und das Ausgeben einer Fähigkeitsangabe zumindest ein Element von Benutzen und/oder Zerschlagen einer Sitzungsinitiierungsrufkennung, Einrichten einer dedizierten eindeutigen Korrelationskennung und Benutzen einer Abrechnungskennung umfasst, und ferner das Senden der Korrelationskennung zu einem anderen Kernnetzwerk-Grenzelement, das an der Kommunikationstransaktion beteiligt ist, umfasst.

3. Verfahren gemäß Anspruch 1 oder 2, wobei die Angabe mindestens ein dediziertes Flag in einer Korrelationskennung umfasst.

4. Verfahren gemäß einem der Ansprüche 1 bis 3, wobei das Durchführen von rechtmäßiger Überwachung im Falle von festgestellter Fähigkeit ferner Folgendes umfasst:
Empfangen einer Angabe zu einer festgestellten Unfähigkeit von rechtmäßiger Überwachung von einem anderen Kernnetzwerk-Grenzelement, das an der Kommunikationstransaktion beteiligt ist, das auf der anderen Seite des Kernnetzwerks in Bezug auf die Kommunikationstransaktion angeordnet ist,
Erfassen einer Notwendigkeit von rechtmäßiger Überwachung auf der anderen Seite des Kernnetzwerks in Bezug auf die Kommunikationstransaktion, auf der das andere Kernnetzwerk-Grenzelement angeordnet ist, und
Durchführen von rechtmäßiger Überwachung von Trägerverkehr in einer Kommunikationstransaktion auf der anderen Seite, falls eine Notwendigkeit erfasst wird.

5. Verfahren gemäß Anspruch 1 oder 4, wobei die Notwendigkeitserfassung Folgendes umfasst:
Prüfen, ob irgend eine der Kernnetzwerkkennungen der jeweiligen Seite mit vorbestimmten Identitäten für das Überwachtwerden übereinstimmt.

6. Verfahren gemäß Anspruch 1 oder 4, wobei die Notwendigkeitserfassung Folgendes umfasst:
Erlangen von Informationen über die Notwendigkeit von rechtmäßiger Überwachung der jeweiligen Seite von einem Steuerfunktionselement innerhalb des Kernnetzwerks.

7. Verfahren gemäß einem der Ansprüche 1 bis 6, wobei das Durchführen von rechtmäßiger Überwachung im Falle einer festgestellten Unfähigkeit ferner Folgendes umfasst:
Einrichten einer Korrelation zwischen rechtmäßigen Überwachungsaufgaben an Kernnetzwerk-Grenzelementen, die zu der gleichen Kommunikationstransaktion gehören, und
Ausgeben einer Angabe zu der festgestellten Unfähigkeit von rechtmäßiger Überwachung zu einem anderen Kernnetzwerk-Grenzelement, das an der gleichen Kommunikationstransaktion beteiligt ist.

8. Verfahren gemäß einem der Ansprüche 1 bis 7, wobei das Kernnetzwerk ein Internetprotokoll-Multimedia-Kernnetzwerk-Untersystem ist.

9. Verfahren gemäß Anspruch 8, wobei das Kernnetzwerk-Grenzelement mindestens ein Element einer Kombination einer Medien-Gateway-Steuerfunktion und eines Medien-Gateways, einer Border-Steuerfunktion und einer Border-Gateway-Funktion, einer Verbindungs-Border-Steuerfunktion und einer Border-Gateway-Funktion, und eines Steuerfunktionselements im Falle der Abwesenheit eines tatsächlichen Grenzelements auf der jeweiligen Seite in der Kommunikationstransaktion umfasst.

10. Vorrichtung, die als Kernnetzwerk-Grenzelement betriebsfähig ist und Folgendes umfasst:
eine Bestimmungseinrichtung, die dazu ausgelegt ist, eine Fähigkeit von rechtmäßiger Überwachung (S910) zu bestimmen,
einen Korrelator, der dazu ausgelegt ist, eine Korrelation zwischen rechtmäßigen Überwachungsaufgaben an Kernnetzwerk-Grenzelementen einzurichten, die zu der gleichen Kommunikationstransaktion (S931, S922-1) gehören,
einen Detektor, der an einem Signalisierungsteil der Vorrichtung angeordnet und dazu ausgelegt ist, eine Notwendigkeit von rechtmäßiger Überwachung auf der Seite des Kernnetzwerks in Bezug auf die Kommunikationstransaktion (S921-2), auf der das ausführende Kernnetzwerk-Grenzelement angeordnet ist, im Falle einer festgestellten Fähigkeit zu erfassen,
einen Informer, der dazu ausgelegt ist, einen Trägerteil der Vorrichtung über die Notwendigkeit von rechtmäßiger Überwachung zu informieren,
einen Überwachungsprozessor, der an dem Trägerteil der Vorrichtung angeordnet und dazu ausgelegt ist, rechtmäßige Überwachung von Trägerverkehr in einer Kommunikationstransaktion auf der Seite des Kernnetzwerks im Falle einer festgestellten Fähigkeit durchzuführen,
einen Delegationsprozessor, der dazu ausgelegt ist, im Falle einer festgestellten Unfähigkeit rechtmäßige Überwachung von Trägerverkehr in einer Kommunikationstransaktion zu einem anderen Element zu delegieren, und
einen Indikator, der dazu ausgelegt ist, eine Angabe zu der festgestellten Fähigkeit oder Unfähigkeit von rechtmäßiger Überwachung zu einem anderen Kernnetzwerk-Grenzelement, das an der gleichen Kommunikationstransaktion (S932, S922-2) beteiligt ist, auszugeben.

11. Vorrichtung gemäß Anspruch 10, wobei der Korrelator und der Indikator dazu ausgelegt sind, eine rechtmäßige Überwachungskorrelation einzurichten und eine Fähigkeitsangabe auszugeben durch mindestens ein Element von Benutzen und/oder Zerschlagen einer Sitzungsinitiierungsrufkennung, Einrichten einer dedizierten eindeutigen Korrelationskennung und Benutzen einer Abrechnungskennung, und
wobei die Vorrichtung ferner einen Sender umfasst, der dazu ausgelegt ist, die Korrelationskennung zu einem anderen Kernnetzwerk-Grenzelement, das an der Kommunikationstransaktion beteiligt ist, zu senden.

12. Vorrichtung gemäß Anspruch 10 oder 11, wobei die Angabe mindestens ein dediziertes Flag in einer Korrelationskennung umfasst.

13. Vorrichtung gemäß einem der Ansprüche 10 bis 12, die ferner Folgendes umfasst:
einen Empfänger, der dazu ausgelegt ist, im Falle einer festgestellten Fähigkeit eine Angabe zu einer festgestellten Unfähigkeit von rechtmäßiger Überwachung von einem anderen Kernnetzwerk-Grenzelement, das an der Kommunikationstransaktion beteiligt ist, das auf der anderen Seite des Kernnetzwerks in Bezug auf die Kommunikationstransaktion angeordnet ist, zu empfangen, und
einen Detektor, der dazu ausgelegt ist, eine Notwendigkeit von rechtmäßiger Überwachung auf der anderen Seite des Kernnetzwerks in Bezug auf die Kommunikationstransaktion, auf der das andere Kernnetzwerk-Grenzelement angeordnet ist, zu erfassen, und
wobei der Überwachungsprozessor ferner dazu ausgelegt ist, rechtmäßige Überwachung von Trägerverkehr in einer Kommunikationstransaktion auf der anderen Seite durchzuführen, falls eine Notwendigkeit erfasst wird.

14. Vorrichtung gemäß Anspruch 10 oder 13, wobei der Detektor Folgendes umfasst:
einen Prüfer, der dazu ausgelegt ist zu prüfen, ob irgend eine der Kernnetzwerkkennungen der jeweiligen Seite mit vorbestimmten Identitäten für das Überwachtwerden übereinstimmt.

15. Vorrichtung gemäß Anspruch 10 oder 13, wobei der Detektor Folgendes umfasst:
einen Gainer, der dazu ausgelegt ist, Informationen über die Notwendigkeit von rechtmäßiger Überwachung der jeweiligen Seite von einem Steuerfunktionselement innerhalb des Kernnetzwerks zu erlangen.

16. Vorrichtung gemäß einem der Ansprüche 10 bis 15, die ferner Folgendes umfasst:
einen Korrelator, der dazu ausgelegt ist, im Falle von festgestellter Unfähigkeit eine Korrelation zwischen rechtmäßigen Überwachungsaufgaben an Kernnetzwerk-Grenzelementen, die zu der gleichen Kommunikationstransaktion gehören, einzurichten, und
einen Indikator, der dazu ausgelegt ist, im Falle von festgestellter Unfähigkeit eine Angabe zu der festgestellten Unfähigkeit von rechtmäßiger Überwachung zu einem anderen Kernnetzwerk-Grenzelement, das an der gleichen Kommunikationstransaktion beteiligt ist, auszugeben.

17. Vorrichtung gemäß einem der Ansprüche 10 bis 16, wobei die Vorrichtung zumindest als ein Element einer Kombination einer Medien-Gateway-Steuerfunktion und eines Medien-Gateways, einer Border-Steuerfunktion und einer Border-Gateway-Funktion, einer Verbindungs-Border-Steuerfunktion und einer Border-Gateway-Funktion, und eines Steuerfunktionselements im Falle der Abwesenheit eines tatsächlichen Grenzelements auf der jeweiligen Seite in der Kommunikationstransaktion betriebsfähig ist.

## Revendications

1. Procédé sur un élément de limite de réseau central, comprenant
la détermination d'une capacité d'interception légale (S910),
l'établissement d'une corrélation entre des tâches d'interception légale sur des éléments de limite de réseau central appartenant à la même transaction de communication (S931, S922-1),
l'exécution d'une interception légale de trafic de support dans une transaction de communication (S921-2), si la capacité est déterminée, ladite exécution comprenant
la détection, sur une partie signalisation de l'élément de limite de réseau central, d'une nécessité d'interception légale sur le côté du réseau central concernant la transaction de communication, sur lequel se trouve l'élément de limite de réseau central d'exécution,
l'information d'une partie support de l'élément de limite de réseau central de la nécessité d'interception légale,
l'exécution, sur la partie support de l'élément de limite de réseau central, d'une interception légale de trafic de support dans une transaction de communication sur ledit côté du réseau central, et
la délivrance d'une indication de la capacité d'interception légale déterminée à un autre élément de limite de réseau central participant à la même transaction de communication, et
la délégation de l'interception légale de trafic de support dans une transaction de communication à un autre élément (S923-3), si l'incapacité est déterminée, ladite délégation comprenant
la délivrance d'une indication de l'incapacité d'interception légale déterminée à un autre élément de limite de réseau central participant à la même transaction de communication.

2. Procédé selon la revendication 1, dans lequel l'établissement d'une corrélation d'interception légale et la délivrance d'une indication de capacité comprennent au moins un élément parmi l'utilisation et/ou le hachage d'un identifiant d'appel d'ouverture de session, la mise en place d'un identifiant de corrélation unique dédié, et l'utilisation d'un identifiant de chargement, et comprennent en outre l'envoi de l'identifiant de corrélation à un autre élément de limite de réseau central participant à la transaction de communication.

3. Procédé selon la revendication 1 ou 2, dans lequel l'indication comprend au moins un drapeau dédié dans un identifiant de corrélation.

4. Procédé selon l'une quelconque des revendications 1 à 3, dans lequel l'exécution d'une interception légale en cas de capacité déterminée comprend en outre
la réception d'une indication d'une incapacité d'interception légale déterminée depuis un autre élément de limite de réseau central participant à la transaction de communication, qui se trouve sur l'autre côté du réseau central concernant la transaction de communication,
la détection d'une nécessité d'interception légale sur l'autre côté du réseau central concernant la transaction de communication, sur lequel se trouve l'autre élément de limite de réseau central, et
l'exécution d'une interception légale de trafic de support dans une transaction de communication sur l'autre côté, si une nécessité est détectée.

5. Procédé selon la revendication 1 ou 4, dans lequel la détection de nécessité comprend
la vérification si l'un quelconque des identifiants de réseau central du côté respectif correspond à des identités prédéterminées en vue d'une interception.

6. Procédé selon la revendication 1 ou 4, dans lequel la détection de nécessité comprend
la collecte d'informations sur la nécessité d'une interception légale du côté respectif auprès d'un élément fonctionnel de commande à l'intérieur du réseau central.

7. Procédé selon l'une quelconque des revendications 1 à 6, dans lequel l'exécution d'une interception légale en cas d'incapacité déterminée comprend en outre
l'établissement d'une corrélation entre des tâches d'interception légale sur des éléments de limite de réseau central appartenant à la transaction de communication, et
la délivrance d'une indication de l'incapacité déterminée d'une interception légale à un autre élément de limite de réseau central participant à la même transaction de communication.

8. Procédé selon l'une quelconque des revendications 1 à 7, dans lequel le réseau central est un sous-système de réseau central multimédia à protocole internet.

9. Procédé selon la revendication 8, dans lequel l'élément de limite de réseau central comprend au moins l'une d'une combinaison d'une fonction de commande de passerelle média et d'une passerelle média, d'une fonction de commande de limite et d'une fonction de passerelle de limite, d'une fonction de commande de limite d'interconnexion et d'une fonction de passerelle de limite, et d'un élément fonctionnel de commande en cas d'absence d'un élément de limite effectif sur le côté respectif dans la transaction de communication.

10. Appareil, opérationnel comme élément de limite de réseau central, comprenant
un déterminateur configuré pour déterminer une capacité d'interception légale (S910),
un corrélateur configuré pour établir une corrélation entre des tâches d'interception légale sur des éléments de limite de réseau central appartenant à la même transaction de communication (S931, S922-1),
un détecteur, agencé sur une partie signalisation de l'appareil, configuré pour détecter une nécessité d'interception légale sur le côté du réseau central concernant la transaction de communication (S921-2), sur lequel se trouve l'élément de limite de réseau central d'exécution en cas de capacité déterminée,
un informateur configuré pour informer une partie support de l'appareil de la nécessité d'interception légale,
un processeur d'interception, agencé sur la partie support de l'appareil, configuré pour effectuer une interception légale de trafic de support dans une transaction de communication sur le côté du réseau central en cas de capacité déterminée,
un processeur de délégation configuré pour déléguer une interception légale de trafic de support dans une transaction de communication à un autre élément en cas d'incapacité déterminée, et
un indicateur configuré pour délivrer une indication de la capacité ou incapacité d'interception légale déterminée à un autre élément de limite de réseau central participant à la même transaction de communication (S932, S922-2).

11. Appareil selon la revendication 10, dans lequel le corrélateur et l'indicateur sont configurés pour établir une corrélation d'interception légale et pour délivrer une indication de capacité par au moins un élément parmi l'utilisation et/ou le hachage d'un identifiant d'appel d'ouverture de session, la mise en place d'un identifiant de corrélation unique dédié, et l'utilisation d'un identifiant de chargement, et
dans lequel l'appareil comprend en outre un émetteur configuré pour envoyer l'identifiant de corrélation à un autre élément de limite de réseau central participant à la communication transaction.

12. Appareil selon la revendication 10 ou 11, dans lequel l'indication comprend au moins un drapeau dédié dans un identifiant de corrélation.

13. Appareil selon l'une quelconque des revendications 10 à 12, comprenant en outre
un récepteur configuré pour recevoir une indication d'une incapacité d'interception légale déterminée depuis un autre élément de limite de réseau central participant à la transaction de communication, qui se trouve sur l'autre côté du réseau central concernant la transaction de communication, en cas de capacité déterminée, et
un détecteur configuré pour détecter une nécessité d'interception légale sur l'autre côté du réseau central concernant la transaction de communication, sur lequel se trouve l'autre élément de limite de réseau central, et
dans lequel le processeur d'interception est en outre configuré pour effectuer une interception légale de trafic de support dans une transaction de communication sur l'autre côté, si une nécessité est détectée.

14. Appareil selon la revendication 10 ou 13, dans lequel le détecteur comprend
un vérificateur configuré pour vérifier si l'un quelconque des identifiants de réseau central du côté respectif correspond à des identités prédéterminées en vue d'une interception.

15. Appareil selon la revendication 10 ou 13, dans lequel le détecteur comprend
un collecteur configuré pour collecter des informations sur la nécessité d'interception légale du côté respectif auprès d'un élément fonctionnel de commande à l'intérieur du réseau central.

16. Appareil selon l'une quelconque des revendications 10 à 15, comprenant en outre
un corrélateur configuré pour établir une corrélation entre des tâches d'interception légale sur des éléments de limite de réseau central appartenant à la même transaction de communication en cas d'incapacité déterminée, et
un indicateur configuré pour délivrer une indication de l'incapacité d'interception légale déterminée à un autre élément de limite de réseau central participant à la même transaction de communication en cas d'incapacité déterminée.

17. Appareil selon l'une quelconque des revendications 10 à 16, dans lequel l'appareil est opérationnel comme au moins l'une parmi une combinaison d'une fonction de commande de passerelle média et d'une passerelle média, d'une fonction de commande de limite et d'une fonction de passerelle de limite, d'une fonction de commande de limite d'interconnexion et d'une fonction de passerelle de limite, et d'un élément fonctionnel de commande en cas d'absence d'un élément de limite effectif sur le côté respectif dans la transaction de communication.
